# EUROPEAN PATENT SPECIFICATION

(11) **EP 3 764 299 B1**
(45) Date of publication and mention of the grant of the patent: **18.10.2023**
(21) Application number: 19184908.2
(22) Date of filing: 08.07.2019
(51) Int. Cl.: G06Q 10/08

(54) **METHOD OF DELEGATING DATA EDITING AUTHORITY OF PRODUCT ITEMS**
VERFAHREN ZUR DELEGIERUNG DER AUTORITÄT FÜR DATENBEARBEITUNG VON PRODUKTELEMENTEN
PROCÉDÉ DE DÉLÉGATION DE L'AUTORITÉ D'ÉDITION DE DONNÉES D'ARTICLES DE PRODUITS

(43) Date of publication of application: 13.01.2021
(73) Proprietor: Hong, Rong-Der, Taichung City 407 (TW)
(72) Inventor: HONG, Rong-Der, 407 Taichung City (TW); LEE, Chien-Hung, 408 Taichung City (TW)
(74) Representative: Viering, Jentschura & Partner mbB Patent- und Rechtsanwälte

(56) References cited:
- US-A1- 2013 227 653

## Description

### BACKGROUND OF THE INVENTION

### 1. Technical Field

The present invention relates generally to data authorization, and more particularly to a method of delegating data editing authority of product items.

### 2. Description of Related Art

In the management of common product items, scheduled maintenance is usually required. Take the management of hanging devices as an example, which include hooks, buckles, carabiners, and fall arresters, to ensure the safety of users, hanging devices must be regularly inspected. The hanging devices are able to be used only after being qualified. For companies managing considerable hanging devices, the managers have to file the inspection data for management and scheduled maintenance in an easy way.

In general, the inspection of the hanging devices is carried out by internal inspectors. However, if the hanging devices to be inspected is too numerous to deal with internally, the company has to outsource the inspection of a part of hanging devices.

Nevertheless, how to efficiently transfer the filed data of product items to outsourcing units or workers is a problem to be solved. US 2013/227653A1 refers to one unique identification code (UID) registration center comprises of plural authorized parties' account, where each account comprises at least one product data file with UID, in which UID is associated with a product, to enable over at least one communication network (such as cloud computing), to access, verify, edit, transfer, transmit, and/or otherwise manage at least one information item, including ownership right related to the product transfer between each party, etc. application corresponding to registered products in the UID registration center.

### BRIEF SUMMARY OF THE INVENTION

In view of the above, the primary objective of the present invention is to provide a method of delegating data editing authority of product items so that it would be more convenient to transfer the data of product items.

The present invention provides a method of delegating data editing authority of product items, which is applied to a data management system. The data management system includes a database storing a plurality of product items. The method includes the following steps.

A. select a plurality of product items in the database, which is done by a first party, and then define the plurality of product items as a plurality of authorized items;

B. the data management system generates an authorization code which is corresponding to the authorized items, and generates a notification message which is corresponding to the authorization code;

C. provide an electronic device connected to the data management system; a second party responds the notification message through the electronic device;

D. the data management system obtains the authorized items from the database according to the authorization code which is corresponding to the notification message responded by the second party, and then transfers the authorized items to the electronic device;

E. select at least one of the received authorized items through the electronic device, and revise the content of the selected authorized items, and then transfer the revised content to the database for storage.

By the authorization code, the second party can obtain the data of the authorized items delegated by the manager of the product items of the first party through the electronic device, and further use the obtained data of the authorized items, which makes the transmission of data more convenient.

### BRIEF DESCRIPTION OF THE SEVERAL VIEWS OF THE DRAWINGS

The present invention will be best understood by referring to the following detailed description of some illustrative embodiments in conjunction with the accompanying drawings, in which
FIG. 1 is a schematic diagram of the data management system and the connection structure thereof, to which the first preferred embodiment of the present invention is applied;
FIG. 2 is a schematic diagram of the database of the first preferred embodiment;
FIG. 3 is a flow chart of the first preferred embodiment of the present invention;
FIG. 4 is a schematic diagram of the content in the authorized items transferred to the first electronic device of the first preferred embodiment;
FIG. 5 is a schematic diagram of the content in the authorized items transferred to the second electronic device of the first preferred embodiment;
FIG. 6 is a flow chart of the second preferred embodiment of the present invention;
FIG. 7 is a schematic diagram of the revised content in the authorized items through the first electronic device of the second preferred embodiment;
FIG. 8 is a schematic diagram of the database with the updated content in the authorized items of the second preferred embodiment;
FIG. 9 is a flow chart of the third preferred embodiment of the present invention;
FIG. 10 is a schematic diagram of the database of the third preferred embodiment;
FIG. 11 is a schematic diagram of the content in the authorized items transferred to the first electronic device of the third preferred embodiment;
FIG. 12 is a flow chart of the fourth preferred embodiment of the present invention;
FIG. 13 is a schematic diagram of the database of the fourth preferred embodiment;
FIG. 14 is a flow chart of another part of the fourth preferred embodiment of the present invention;
FIG. 15 is a flow chart of the fifth preferred embodiment of the present invention; and
FIG. 16 is a schematic diagram of the database of the fifth preferred embodiment.

### DETAILED DESCRIPTION OF THE INVENTION

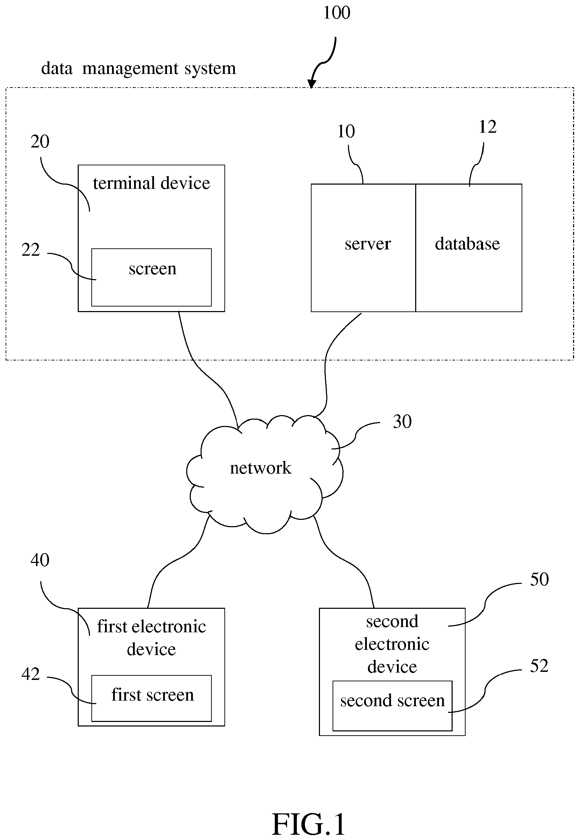

As shown in FIG. 1, a data management system 100 and the connection structure thereof, to which the first preferred embodiment of the present invention is applied, are illustrated. The data management system 100 includes a server 10, a database 12, and a terminal device 20. The server 10 is connected to the database 12, and the terminal device 20 is connected to the server 10. In this embodiment, the terminal device is connected to the server 10 through a network 30 which could be local area network or Internet. The terminal device 20 could be a computer, a smart phone, or a tablet, which are networkable equipment.

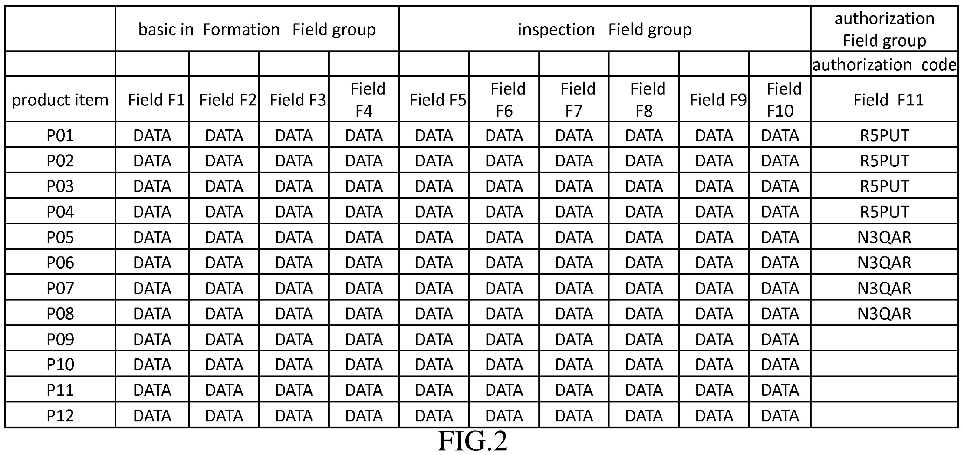

As shown in FIG. 2, the database 12 contains data from product items P01 to P12 of a first party. The server 10 is provided to process the data in the database 12. In this embodiment, the product items P01 to P12 are hanging devices such as hooks, buckles, carabiners, and fall arresters. The data of each product item contains multiple fields (field F1 to field F15) which include a basic information field group (field F1 to field F4), an inspection field group (field F5 to field F10), and an authorization field group (field F11 to field F15). Furthermore, the basic information of product items P01 to P12 are recorded in the basic information field group (field F1 to field F4). For example, the product name is recorded in field F1, the product number is recorded in field F2, the manufacture date is recorded in field F3, and the manager is recorded in field F4. Content recorded in fields F1 to F4 are represented as "DATA".

The inspection data of product items are recorded in the inspection field group (field F5 to field F10). For example, the inspector is recorded in field F5, the inspection standard is recorded in field F6, the inspection time is recorded in field F7, the inspection location is recorded in field F8, the inspected part is recorded in field F9, and the qualified status is recorded in field F10. Content recorded in fields F5 to F10 are represented as "DATA".

Additionally, the authorization field group (field F11) is provided for recording the delegated status, that is, whether the handling of product item is delegated to others. For example, field F11 is an authorization code field which is provided for recording the authorization code.

The aforementioned field groups and the number of fields are only examples rather than limitations on the present invention. The database 12 shown in FIG. 1 of the first preferred embodiment is independent of the server 10. However, this is not a limitation on the present invention. In other words, the database 12 and the server 10 could be integrated into a host.

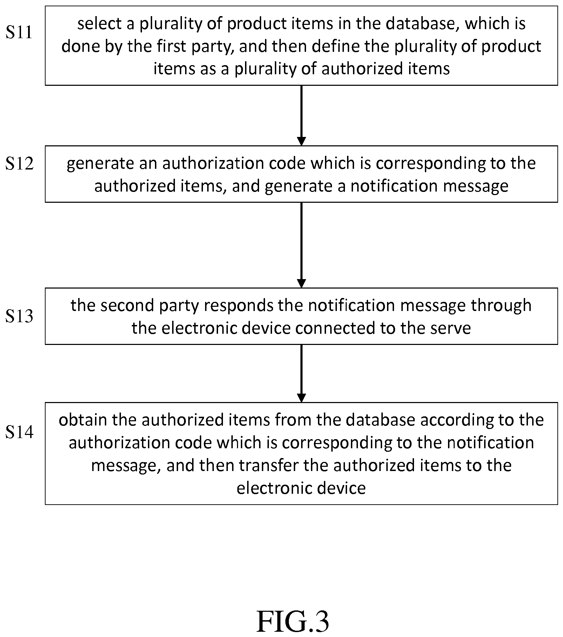

By the above structure, a method of delegating data editing authority of the product items in this embodiment includes the following steps shown in FIG. 3.

Step S11: the first party selects a plurality of product items from the product items P01 to P12 in the database 12; define the plurality of product items as a plurality of authorized items. In this embodiment, the manager of the first party who manages the product items P01 to P12 operates the terminal device 20 to connect the terminal device 20 to the server 10. The server 10 transfers the data of the product items P01 to P12 in the database 12 to the terminal device 20, and the data is displayed on a screen 22 of the terminal device 20. Next, the manager of the first party could select the product items from the product items P01 to P12 through the terminal device 20 to delegate the management the selected product items to others. For example, the manager of the first party selects the product items P01 to P04, and delegates the management of the product items P01 to P04 to a first inspection unit (a second party). In the other hand, the manager of the first party selects the product items P05 to P08, and delegates the management of the product items P05 to P08 to a second inspection unit (another second party). The other product items P09 to P12 are managed by the manager of the first party.

The terminal device 20 transfers the selected results to the server 10. The server 10 then defines the product items P01 to P04 as a set of a plurality of authorized items, and defines the product items P05 to P08 as another set of a plurality of authorized items, while defines the product items P09 to P12 as unauthorized items.

The abovementioned selection of two sets of authorized items is only an example rather than limitations on the present invention. In other words, the manager of the first party could select only a set of product items P01 to P12 which is defined as a set of authorized items.

Step S12: the data management system generates an authorization code which is corresponding to the authorized items, and generates a notification message which is corresponding to the authorization code. In this embodiment, the server 10 generates an authorization code corresponding to the selected authorized items. The authorization code can be generated in any way, for example, randomly or according to any encoding scheme. Different sets of authorized items have different authorization codes. The server 10 lists the authorization codes in the authorization code field (field F11) of the corresponding authorized items in the database 12. For example, the server generates an authorization code "R5PUT" corresponding to the product items P01 to P04, and lists "R5PUT" in the authorization code field (field F11) of the product items P01 to P04 in the database 12. Additionally, the server generates an authorization code "N3QAR" corresponding to the product items P05 to P08, and lists "N3QAR" in the authorization code field (field F11) of the product items P05 to P08 in the database 12. In the other hand, the product items P09 to P12 are unauthorized so that the authorization code field thereof (field F11) is blank.

Next, the server 10 generates notification messages which are corresponding to the authorization codes respectively. The manager of the first party can select one of the notification messages from the server 10, and sends the selected notification message to at least one inspection unit (at least one second party) to be authorized. For example, send the notification message which is corresponding to the authorization code "R5PUT" of the product items P01 to P04 to the first inspection unit; send the notification message which is corresponding to the authorization code "N3QAR" of the product items P05 to P08 to the second inspection unit. The sent notification message can be in the form of a message module in the server 10, or a hyperlink transmitted to the outside by email or the communication software; once click the hyperlink, the receiver will link to the message module in the server 10 and get the notification message.

Step S13: provide an electronic device connected to the data management system; the second party responds to the notification message through the electronic device. In this embodiment, the electronic device is a first electronic device 40 or a second electronic device 50. The member of the first inspection unit is connected to the server 10 through the first electronic device 40 for responding to the corresponding notification message; the member of the second inspection unit is connected to the server 10 through the second electronic device 50 for responding to the corresponding notification message. In other words, the responding to the notification message by the second party represents that the second party receives the commission of the first party. The first electronic device 40 and the second electronic device 50 can be computers, smart phones, or tablets, which are networkable equipment and are connected to the server 10 through the network 30 in a wired or wireless manner. Moreover, the first electronic device 40 has a first screen 42, and the second electronic device 50 has a second screen 52, which are provided for displaying data. The members are connected to the server 10 by the first electronic device 40 or the second electronic device 50, and afterward enter the message module of the server 10 to get the corresponding notification message, or click the hyperlink in the email or communication software to be connected to the server 10 and enter the message module to get the corresponding notification message.

In this embodiment, it takes two inspection units (two second parties) as an example. However, the number of the inspection unit can be at least one or more than three practically. In addition, the number of the electronic device corresponds to the number of the inspection unit, which is at least one or more than three.

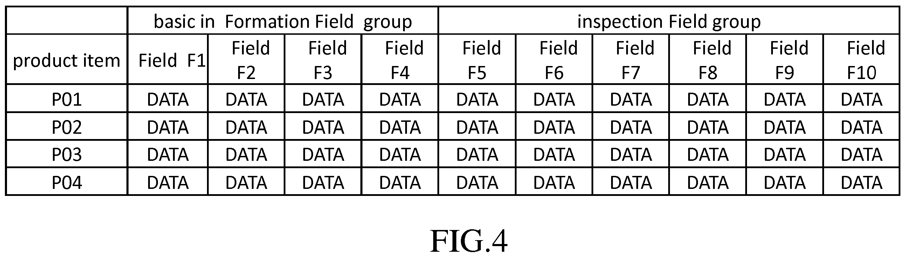

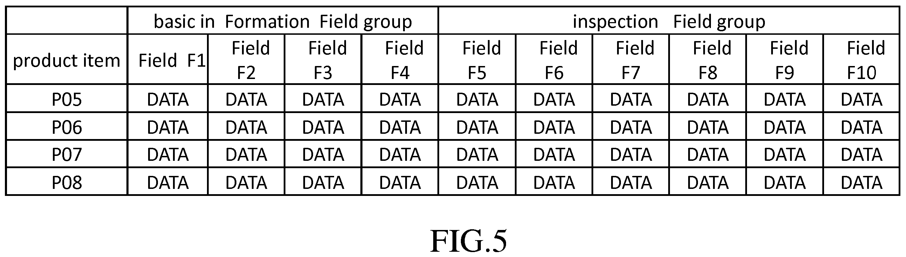

Step S14: the data management system 100 obtains the authorized items from the database 12 according to the authorization code which is corresponding to the notification message that is responded by the second party, and then transfers the authorized items to the corresponding electronic device. In this embodiment, after the server 10 confirms that the second party responds to the notification message, it will record the electronic device which responds to the notification message. Furthermore, the server 10 compares the authorization code which is corresponding to the notification message with the authorization code field (field F11) of the product items P01 to P12 in the database 12 for screening and obtaining the authorized items. For example, the notification message which is responded by the first electronic device 40 is corresponding to the authorization code "R5PUT". Therefore, the server 10 screens and selects the corresponding authorized items (i.e. product items P01 to P04) from the database 12 according to "R5PUT". The server 10 afterward transfers the data of the authorized items (product items P01 to P04) to the first electronic device 40 (as shown in FIG. 4), and displays the data on the first screen 42. Also, the notification message which is responded by the second electronic device 50 is corresponding to the authorization code "N3QAR". Accordingly, the server 10 transfers the data of the corresponding authorized items (product items P05 to P08) to the second electronic device 50 (as shown in FIG. 5), and displays the data on the second screen 52.

In addition, the following embodiments are also able to achieve the above effects, that is, make the transmission of data more convenient.

By abovementioned steps S11 to S14, each inspection unit (i. e., each second party) can obtain the data of the authorized items that are delegated by the manager of the first party who manages the product items P01 to P12 through each received notification message by the first electronic device 40 or the second electronic device 50. Thereby, the second party can further use the obtained data of the authorized items, and the transmission of data can be more convenient. Moreover, the data obtained by the two inspection units will not be repeated.

In practice, a plurality of accounts can be recorded in the data management system. Each of the accounts belongs to one inspection unit, and is recorded in the server 10 or the database 12. In step S12, the manager of the first party assigns the selected authorized items to one of the accounts through the terminal device 20, and transfers the notification message to the selected account. In step S13, the second party is connected to the server 10 by the account thereof through the electronic device, and responds to the notification message.

Furthermore, the embodiments provided below can also achieve the above effects, i. e., make the transmission of data more convenient.

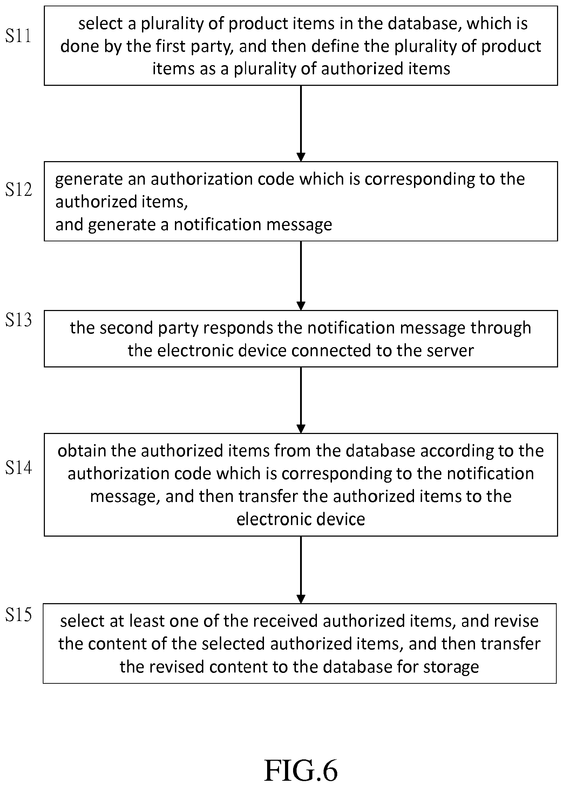

As illustrated in FIG. 6, the second preferred embodiment of the present invention, method of delegating data editing authority of product items, is based on the first preferred embodiment. Besides steps S11 to S14, the second embodiment further includes step: the electronic device selects at least one of the received authorized items, and revises the content of the selected authorized items, and then transfers the revised content to the database 12 for storage.

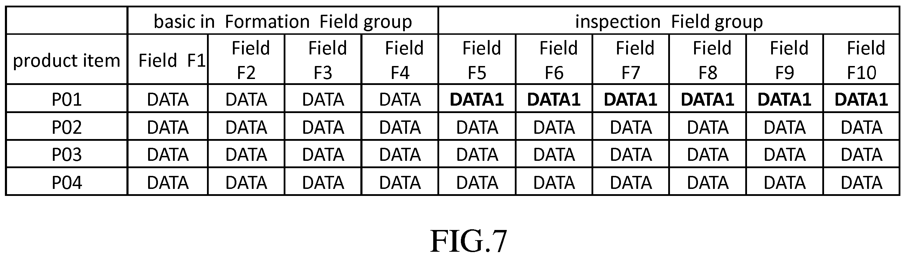

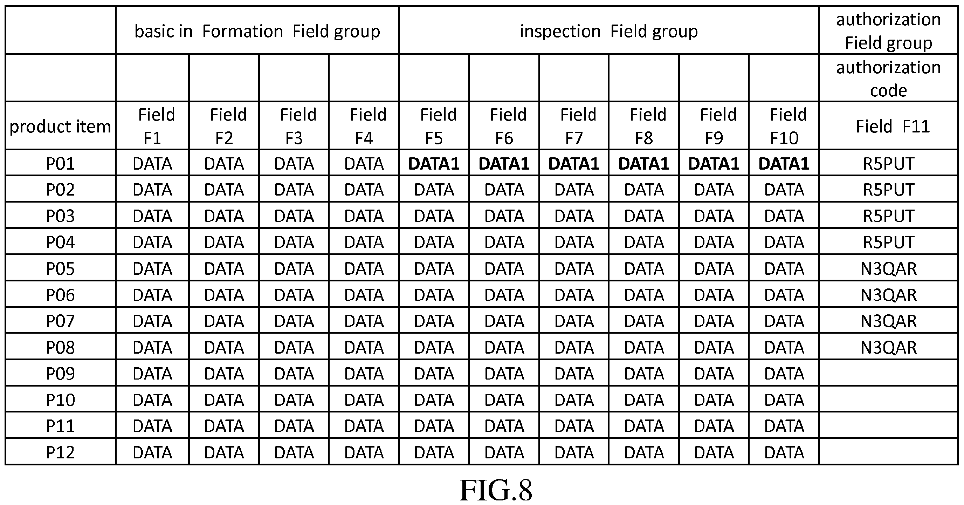

In this embodiment, at least one field is provided as a revisable field in the database. For example, the revisable field is at least one field in the inspection field group (field F5 to field F10). Basic information field group is not revisable for the inspection unit. Take the first inspection unit for example, the first electronic device 40 displays the received authorized items on the first screen 42; the member of the first inspection unit can thereby select the content to be revised. For example, as shown in FIG. 7, after finishing the inspection of the product item P01, the member revises the content of at least one field in the inspection field group according to the inspection results; in this example, all fields of the inspection field group (field F5 to field F10) are updated to the latest statuses represented as "DATA1". The first electronic device 40 transfers the revised content of the product item P01 to the server 10, and the server 10 stores the revised content to the database 12 to replace the old data (as shown in FIG. 8). Thereby, all the product items can be maintained in the same database 12.

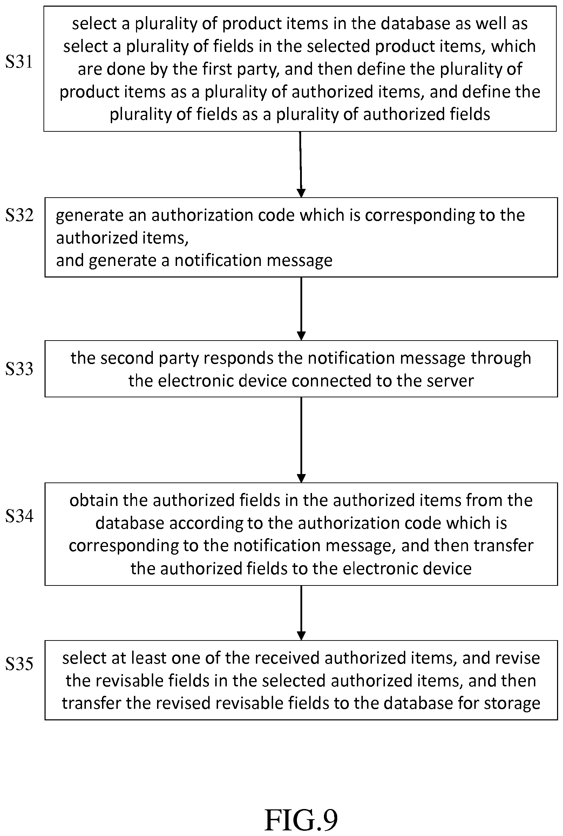

As shown in FIG. 9, the third preferred embodiment of the present invention is based on the second preferred embodiment, and includes the following steps.

In step S31: select a plurality of product items from the product items P01 to P12 in the database 12 as well as select a plurality of fields in the selected product items; then define the selected plurality of product items as a plurality of authorized items, and define the selected plurality of fields as a plurality of authorized fields. Step S31 is based on step S11; the manager selects the product items P01 to P04 through the terminal device 20 as well as selects field F1 in the basic information field and field F5 to field F10 in the inspection field group of the product items P01 to P04. The server 10 defines the product items P01 to P04 as authorized items and records in the database 12, and also defines the field F1 and field F5 to field F10 of the product items P01 to P04 as authorized fields, and records in the database 12. The authorized fields F5 to F10 are revisable fields in this embodiment; practically, the number of revisable fields could be only one instead.

Step S32: generate an authorization code which is corresponding to the authorized items, and generate a notification message that is corresponding to the authorization code. Step S32 is the same as step S12. The server 10 lists the generated authorization code "R5PUT" in the authorization code field (field F11) of the product items P01 to P04 in the database, and generates the notification message corresponding to the authorization code.

Step S33: the second party responds to the notification message through the electronic device; this step S33 is the same as step S13. The member of the first inspection unit is connected to the server 10 by the first electronic device 40 to obtain and respond to the notification message.

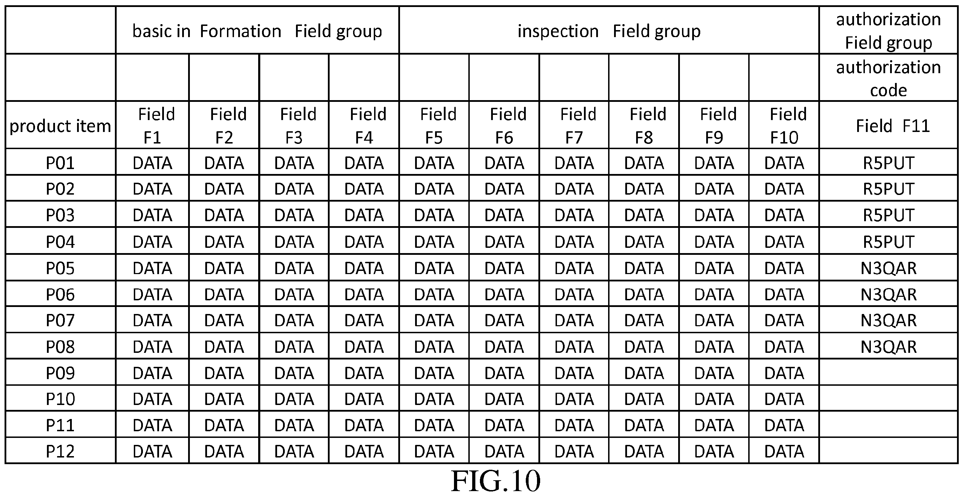

Step S34: obtain the authorized fields in the authorized items from the database 12 according to the authorization code which is corresponding to the notification message responded by the second party, and then transfer the authorized fields to the electronic device. This step S34 is based on step S14. According to "R5PUT", the server 10 screens the database 12 and selects the corresponding authorized items (i. e., product items P01 to P04) and the authorized fields in the authorized items (field F1 and field F5 to field F10, referring to FIG. 10). The server 10 transfers the data of the authorized fields in the authorized items to the first electronic device 40.

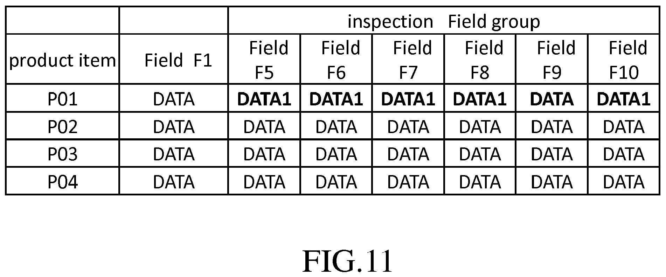

Step S35: select at least one of the received authorized items by the electronic device, and revise the revisable fields in the selected authorized items, and then transfer the revised data of the revisable fields to the database 12 for storage. This step S35 is similar to step S15. The authorized items are displayed on the first screen 42 of the first electronic device 40 for the members to select the authorized items to be revised and the revisable fields thereof. For example, as illustrated in FIG. 11, the content of the field F5 to field F10 in the product item P01 are revised to "DATA1". Afterward, the first electronic device 40 transfers the revised data of the field F5 to field F10 in the product item P01 to the server 10 for storing in the database 12 so as to replace the old data. Thereby, the fields that are not revisable will not be revised by the inspection unit.

The step of selecting the authorized fields (step S31) and the step of transferring the authorized fields (step S34) in this embodiment are also respectively applied to step S11 and step S14 in the first as well as the second embodiments.

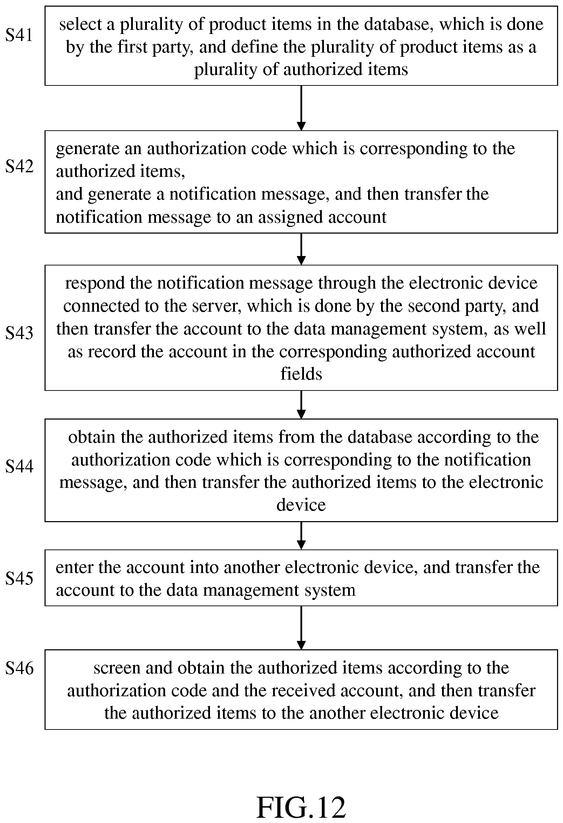

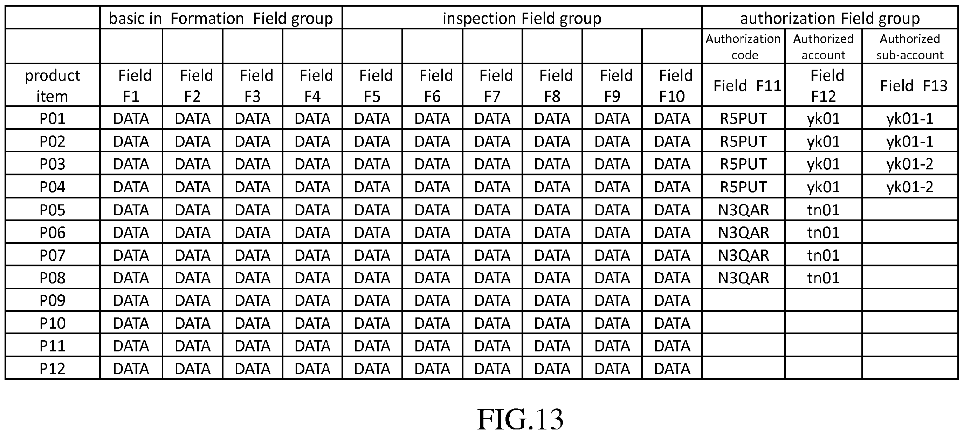

As shown in FIG. 12, the fourth preferred embodiment of the present invention is based on the first preferred embodiment. As illustrated in FIG. 13, in this embodiment, the authorization field group of the product items P01 to P12 in the database 12 includes field F12 (authorized account field) for recording authorized account. In addition, a plurality of accounts are recorded in the data management system; the accounts can be recorded in the server 10 or the database 12.

Steps S41 and S44 in this embodiment are respectively the same as steps S11 and S14 in the first embodiment; the differences between this embodiment and the first embodiment include:

Step S42: similar to step S12, after generating an authorization code and a corresponding notification message, the data management system transfers the notification message to an account assigned by the first party.

Step S43: when the second party responds to the notification message through the electronic device connected to the server 10, the electronic device obtains the account responded by the second party, and then transfers the account to the data management system 10. Furthermore, the data management system 100 transfers the account to the database 12, and records the account in the authorized account fields (field F12) in the authorized items. In this embodiment, the members of the inspection unit are connected to the server 10 through the first electronic device 40 or the second electronic device 50 by their own accounts. After responding to the notification message, the server 10 records the account in the authorized account fields (field F12) in the authorized items which are corresponding to the authorization code. For example, the member is connected to the server 10 through the first electronic device 40 by account "yk01", and responds the notification message thereof; the account "yk01" is recorded in the authorized account fields (field F12) in the authorized items (product items P01 to P04). Also, the member is connected to the server 10 through the second electronic device 50 by account "tn01", and responds the notification message thereof; the account "tn01" is recorded in the authorized account fields (field F12) in the authorized items (product items P05 to P08).

After step S44, this embodiment further includes:

Step S45: enter the account into another electronic device, and transfer the account to the data management system 100. Take the first inspection unit for example, the members can be connected to the data management system 100 through other electronic devices (e. g., third electronic device which is not shown), and afterward enter and transfer the account "yk01" to the server 10.

Step S46: compare the authorization code and the received account with the authorization code fields (field F11) of the product items P01 to P12 in the database 12 and the authorized account fields (field F12), and thus screen and obtain the authorized items, and then transfer the obtained authorized items to the another electronic device. For example, the server 10 compares the authorization code that is corresponding to the notification message responded by the account in step S43 and the account transferred from the third electronic device with the fields F11 and F12 in the database 12. Next, the server 10 obtains the data of the authorized items (product items P01 to P04), and transfers the data to the third electronic device for subsequent use. For example, the member operating the third electronic device revises the data, and then transfers the revised data back to the server 10 for updating the corresponding data in the database 12.

Members of the second inspection unit can also enter the account "tn01" into different electronic devices to obtain the data of the authorized items (product items P05 to P08) and the subsequent revise.

The abovementioned steps in this embodiment can be applied to the second and the third embodiments as well.

In addition, the authorization field group in this embodiment further includes field F13 (authorized sub-account field) for recording authorized sub-accounts.

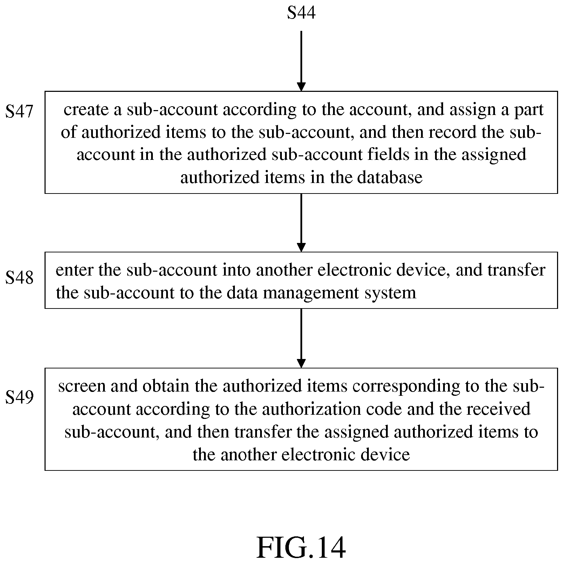

This embodiment further includes steps S47, S48, and S49 as shown in FIG. 14 after step S44, wherein:

step S47: create a sub-account according to the account, and assign a part of authorized items to the sub-account, and then record the sub-account in the authorized sub-account fields (field F13) in the assigned authorized items in the database 12. In this embodiment, take the first inspection unit for example as illustrated in FIG. 13, the member is connected to the server 10 through the first electronic device 40, and enter the account "yk01" for requesting to create sub-accounts "yk01-1" and "yk01-2" which are subordinate to the account "yk01". The server 10 afterward assigns a part of authorized items (product items P01 and P02) to the sub-account "yk01-1", and another part of authorized items (product items P03 and P04) to the sub-account "yk01-2". Subsequently, the server 10 records the sub-accounts "yk01-1" and "yk01-2" in the authorized sub-account fields (field F13) in the corresponding authorized items.

Step S48: be connected to the data management system 100 by another electronic device; enter the sub-account into the another electronic device, and transfer the sub-account to the data management system 100. Take the first inspection unit for example, the member enters the sub-account "yk01-1" into the another electronic device (e. g., the third electronic device), and transfers the sub-account "yk01-1" to the server 10.

Step S49: the data management system 100 compares the authorization codes and the received sub-accounts with the authorization code field and the authorized sub-account field so as to obtain the authorized items corresponding to the sub-accounts as well as to transfer the obtained authorized items to another electronic device. For example, the server 10 compares the authorization code that is corresponding to the notification message responded by the account leading the sub-account in step S43 and the sub-account transferred from the third electronic device with the fields F11 and F13 in the database 12 so as to obtain the data of the authorized items (product items P01 to P02). Next, the data management system 100 transfers the obtained authorized items to the third electronic device for subsequent use; for example, the member operating the third electronic device revises the data, and then transfers the revised data back to the server 10 for updating the corresponding data in the database 12.

Thereby, the inspection unit can reassign the authorized items to the subordinate member for management. Moreover, steps in this embodiment can also be applied to the second embodiment.

In practice, the part of authorized items can be assigned to the accounts instead of the sub-accounts. In other words, authorized sub-account field (field F13) and steps S47 to S49 can be omitted.

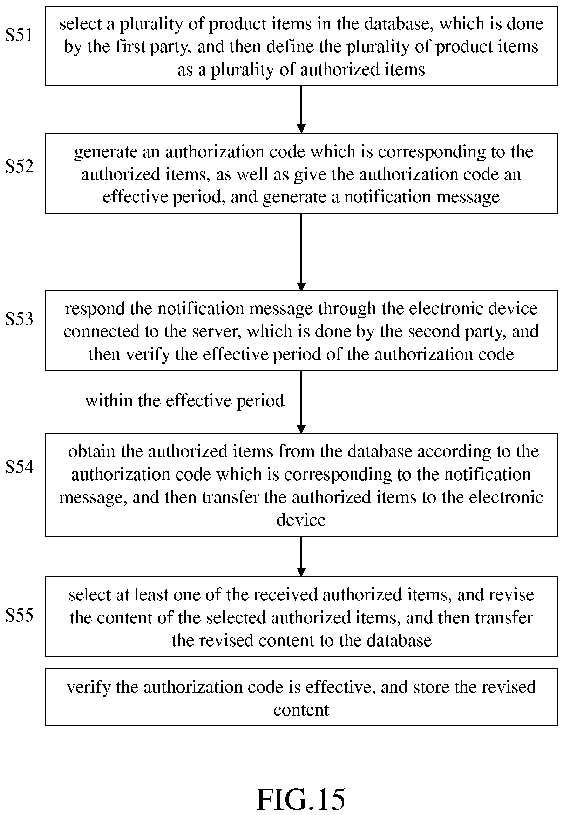

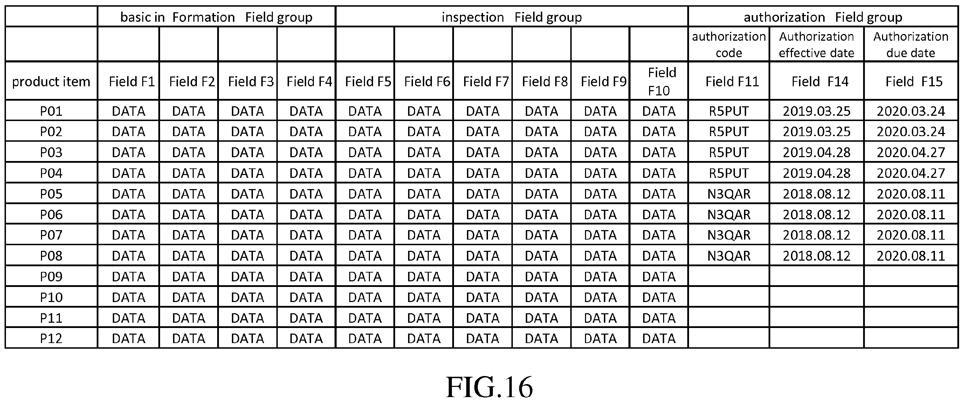

The fifth preferred embodiment of the present invention is shown in FIG. 15. Referring to FIG. 16, in this embodiment, the authorization field group of each of the product items P01 to P12 in the database 12 includes the field F14 (authorization effective date field) and the field F15 (authorization due date field) for recording the effective period of the authorization codes.

Steps S51 to S55 are similar to the steps in the second embodiment, the differences are as follows.

In step S52, the data management system 100 generates an authorization code as well as gives the authorization code an effective period. In this embodiment, the manager enters the authorization effective date and the authorization due date through the terminal device 20 when selecting the authorized items in step S51. The server 10 records the authorization effective date and the authorization due date in the field F14 (authorization effective date field) and the field F15 (authorization due date field) respectively to form the effective period of the authorization code.

Step S53 includes the step of verifying the effective period of the authorization code. In this embodiment, after responding the notification message, the server 10 verifies that the current date falls within the effective period.

If the current date falls within the effective period, step S54 will be performed; if the current date exceeds the effective period, step S54 and the subsequent step S55 will not be taken.

In this embodiment, step S55 that follows step S54 is similar to step S15 in the second embodiment, the differences are as follows.

After the electronic device transfers the revised content to the data management system 100, the server 10 verifies the effective period of the authorization code; if the current date falls within the effective period, the revised content transferred from the electronic device are stored in the database 12; if the current date exceeds the effective period, the revised content transferred from the electronic device will not be stored.

Additionally, step S54 can be followed by the step as below. Before the authorization code expires, the server 10 transfers an effective period notification message to the electronic device to notice the relevant inspection unit to coordinate with the manager to extend the effective period.

Thus, the steps ensure the revised fields in the authorized items can be edited only when the authorization codes are effective, i. e., when the current date falls within the effective period. The step of verifying the effective period of the authorization code in this embodiment can also applied in the first embodiment to the fourth embodiment.

The embodiments described above are only preferred embodiments of the present invention. All equivalent methods which employ the concepts disclosed in this specification and the appended claims should fall within the scope of the present invention.

## Claims

1. A method of delegating data editing authority of product items, which is applied to a data management system (100) comprising a database (12) storing a plurality of product items, wherein the method comprises the steps of:
A. selecting a plurality of product items in the database (12), which is done by a first party, and then defining the plurality of product items as a plurality of authorized items;
B. generating an authorization code corresponding to the authorized items, and generating a notification message corresponding to the authorization code, which are done by the data management system, and giving the authorization code an effective period, which is done by the data management system (100);
C. providing an electronic device (40, 50) connected to the data management system (100); responding to the notification message through the electronic device (40, 50), which is done by a second party; verifying the effective period of the authorization code, wherein taking step D and step E when the current date falls within the effective period; if the current date exceeds the effective period, step D and step E will not be taken;
D. obtaining the authorized items from the database (12) according to the authorization code which is corresponding to the notification message responded by the second party, and then transferring the authorized items to the electronic device (40, 50), which are done by the data management system (100);
E. selecting at least one of the received authorized items through the electronic device (40, 50), and revising content of the selected authorized items, and then transferring the revised content to the database (12) for storage; verifying the effective period of the authorization code with the data management system after the electronic device transfers the revised content to the data management system; if the current date falls within the effective period, stores the revised content transferred from the electronic device (40, 50); if the current date exceeds the effective period, the revised content transferred from the electronic device (40, 50) will not be stored.

2. The method of claim 1, wherein a plurality of accounts are recorded in the data management system (100); step B further comprises the steps of selecting one of the plurality of accounts, and transferring the notification message to the selected account; in step C, the second party responds to the notification message through the electronic device (40, 50) by the selected account.

3. The method of claim 1, further comprising the step as follows after step D:
before the authorization code expires, transferring an effective period notification message to the electronic device (40, 50).

4. The method of claim 1, wherein each of the product items has a plurality of fields; step A further comprises the steps of selecting a plurality of fields in the selected product items, and defining the selected plurality of fields as a plurality of authorized fields in each of the selected product items; in step D, obtain the authorized fields in the authorized items, and then transfer the authorized fields in the authorized items to the electronic device (40, 50).

5. The method of claim 4, wherein the authorized fields in each of the authorized items have at least a revisable field; in step E, revise the revisable field in the selected authorized items, and then transfer the revised content in the revisable field to the database (12) for storage.

6. The method of claim 5, wherein in step E, the authorized items are displayed on a screen (42, 52) of the electronic device (40, 50); click the authorized items displayed on the screen (42, 52), and revise the revisable field in the selected authorized items.

7. The method of claim 1, wherein each of the product items has an authorization code field; step B further comprises the step of listing the authorization code in the authorization code field in the authorized items; in step D, screen and obtain the authorized items by comparing the authorization code with the authorization code field in the product items in the database (12).

8. The method of claim 7, wherein each of the product items has an authorized account field; a plurality of accounts are recorded in the data management system (100); in step B, transfer the notification message to one of the accounts; step C further comprises the step as follows after responding to the notification message: the data management system (100) records the account which responds to the notification message in the authorized account fields in the authorized items in the database (12);
wherein step D is followed by:
providing another electronic device (40, 50) connected to the data management system, entering the account which responds to the notification message into the another electronic device (40, 50), and transferring the account to the data management system (100);
the data management system (100) compares the authorization code and the received account with the authorization code fields of the product items in the database (12) and the authorized account fields, and thus screens and obtains the authorized items, and then transfers the obtained authorized items to the another electronic device (40, 50).

9. The method of claim 7, wherein each of the product items has an authorized account field and a sub-account field; step C further comprises the steps of entering an account into the electronic device (40, 50), and transferring the account to the data management system (100) as well as recording the account in the authorized account fields in the authorized items in the database (12); after step D, the method further comprises the steps of:
creating a sub-account according to the account, and assigning a part of authorized items to the sub-account, and then recording the sub-account in the authorized sub-account fields in the assigned authorized items in the database (12);
providing another electronic device (40, 50) connected to the data management system (100), entering the sub-account into the another electronic device (40, 50), and transferring the sub-account to the data management system (100);
the data management system (100) compares the authorization code and the received sub-account with the authorization code fields of the product items and the authorized sub-account fields, and thus obtains the authorized items corresponding to the sub-account, and then transfers the obtained authorized items to the another electronic device (40, 50).

## Patentansprüche

1. Ein Verfahren zum Delegieren einer Datenbearbeitungsbefugnis von Produktelementen, welches auf ein Datenverwaltungssystem (100), das eine Datenbank (12), die eine Mehrzahl von Produktelementen speichert, aufweist, angewendet wird, wobei das Verfahren aufweist die folgenden Schritte des:
A. Auswählens einer Mehrzahl von Produktelementen in der Datenbank (12), was von einer ersten Partei durchgeführt wird, und dann Definierens der Mehrzahl von Produktelementen als eine Mehrzahl von autorisierten Elementen,
B. Erzeugens eines Autorisierungscodes, welcher mit den autorisierten Elementen korrespondiert, und Erzeugens einer Benachrichtigungsnachricht, welche mit dem Autorisierungscode korrespondiert, was durch das Datenverwaltungssystem durchgeführt wird, und Verleihen eines Gültigkeitszeitraums an den Autorisierungscode, was durch das Datenverwaltungssystem (100) durchgeführt wird;
C. Bereitstellens einer elektronischen Vorrichtung (40, 50), welche mit dem Datenverwaltungssystem (100) verbunden ist; Beantworten der Benachrichtigungsnachricht durch die elektronische Vorrichtung (40, 50), was von einer zweiten Partei durchgeführt wird; Verifizierens des Gültigkeitszeitraums des Autorisierungscodes, wobei Schritt D und Schritt E durchgeführt werden, wenn das aktuelle Datum in den Gültigkeitszeitraum fällt; Schritt D und Schritt E nicht durchgeführt werden, wenn das aktuelle Datum den Gültigkeitszeitraum überschreitet;
D. Erlangens der autorisierten Elemente von der Datenbank (12) gemäß dem Autorisierungscode, welcher mit der von der zweiten Partei beantworteten Benachrichtigungsnachricht korrespondiert, und anschließenden Übertragens der autorisierten Elemente an die elektronische Vorrichtung (40, 50), beides durchgeführt durch das Datenverwaltungssystem (100),
E. Auswählens mindestens eines der empfangenen autorisierten Elemente durch die elektronische Vorrichtung (40, 50) und Überarbeitens des Inhalts der ausgewählten autorisierten Elemente und anschließenden Übertragens des überarbeiteten Inhalts an die Datenbank (12) zur Speicherung; Überprüfens des Gültigkeitszeitraums des Autorisierungscodes mit dem Datenverwaltungssystem, nachdem die elektronische Vorrichtung den überarbeiteten Inhalt an das Datenverwaltungssystem übertragen hat; wobei, wenn das aktuelle Datum in den Gültigkeitszeitraum fällt, der von der elektronischen Vorrichtung (40, 50) übertragene überarbeitete Inhalt gespeichert wird; wenn das aktuelle Datum den Gültigkeitszeitraum überschreitet, wird der von der elektronischen Vorrichtung (40, 50) übertragene überarbeitete Inhalt nicht gespeichert.

2. Das Verfahren nach Anspruch 1, wobei mehrere Konten in dem Datenverwaltungssystem (100) gespeichert sind; Schritt B ferner aufweist die Schritte des Auswählens eines aus den mehreren Konten und des Übertragens der Benachrichtigungsnachricht an das ausgewählte Konto; in Schritt C die zweite Partei auf die Benachrichtigungsnachricht durch die elektronische Vorrichtung (40, 50) durch das ausgewählte Konto antwortet.

3. Das Verfahren nach Anspruch 1, welches ferner den folgenden Schritt nach Schritt D aufweist:
bevor der Autorisierungscode abläuft, Übertragen einer Benachrichtigungsnachricht über den Gültigkeitszeitraum an die elektronische Vorrichtung (40, 50).

4. Das Verfahren nach Anspruch 1, wobei jedes der Produktelemente eine Mehrzahl von Feldern aufweist, Schritt A ferner aufweist die Schritte des Auswählens einer Mehrzahl von Feldern in den ausgewählten Produktelementen und des Definierens der ausgewählten Mehrzahl von Feldern als eine Mehrzahl von autorisierten Feldern in jedem der ausgewählten Produktelemente; in Schritt D, Erlangen der autorisierten Felder in den autorisierten Elementen und dann Übertragen der autorisierten Felder in den autorisierten Elementen an die elektronische Vorrichtung (40, 50).

5. Das Verfahren nach Anspruch 4, wobei die autorisierten Felder in jedem der autorisierten Elemente mindestens ein abänderbares Feld aufweisen; in Schritt E, Überarbeiten des abänderbaren Felds in den ausgewählten autorisierten Elementen und dann Übertragen des den überarbeiteten Inhalts in dem abänderbaren Feld an die Datenbank (12) zur Speicherung.

6. Das Verfahren nach Anspruch 5, wobei, in Schritt E, die autorisierten Elemente auf einem Bildschirm (42, 52) der elektronischen Vorrichtung (40, 50) angezeigt werden; Anklicken der auf dem Bildschirm (42, 52) angezeigten autorisierten Elemente und Überarbeiten des abänderbaren Feldes in den ausgewählten autorisierten Elementen.

7. Das Verfahren nach Anspruch 1, wobei jedes der Produktelemente ein Autorisierungscodefeld aufweist; Schritt B ferner aufweist den Schritt des Auflistens des Autorisierungscodes im Autorisierungscodefeld in den autorisierten Elementen; in Schritt D, Suchen und Erlangen des autorisierten Elements durch Vergleichen des Autorisierungscodes mit dem Autorisierungscodefeld in den Produktelementen in der Datenbank (12).

8. Das Verfahren nach Anspruch 7, wobei jedes der Produktelemente ein Autorisiertes-Konto-Feld aufweist; mehrere Konten in dem Datenverwaltungssystem (100) aufgezeichnet sind; in Schritt B, Übertragen der Benachrichtigungsnachricht an eines der Konten; Schritt C ferner den folgenden Schritt nach dem Antworten auf die Benachrichtigungsnachricht aufweist: das Datenverwaltungssystem (100) speichert das Konto, welches auf die Benachrichtigungsnachricht antwortet, in den Autorisiertes-Konto-Feldern in den autorisierten Elementen in der Datenbank (12);
wobei Schritt D gefolgt wird von:
Bereitstellen einer weiteren elektronischen Vorrichtung (40, 50), welche mit dem Datenverwaltungssystem verbunden ist, Eingeben des Kontos, welches auf die Benachrichtigungsnachricht antwortet, in die weitere elektronische Vorrichtung (40, 50), und Übertragen des Kontos an das Datenverwaltungssystem (100);
wobei das Datenverwaltungssystem (100) den Autorisierungscode und das empfangene Konto mit den Autorisierungscodefeldern der Produktelemente in der Datenbank (12) und den Autorisiertes-Konto-Feldern vergleicht und somit die autorisierten Elemente sucht und erlangt und dann die erlangten autorisierten Elemente an die weitere elektronische Vorrichtung (40, 50) überträgt.

9. Das Verfahren nach Anspruch 7, wobei jedes der Produktelemente ein Autorisiertes-Konto-Feld aufweist und ein Unterkonto-Feld aufweist; Schritt C ferner aufweist die Schritte des Eingebens eines Kontos in die elektronische Vorrichtung (40, 50) und des Übertragens des Kontos an das Datenverwaltungssystem (100) sowie des Speicherns des Kontos in den Autorisiertes-Konto-Feldern in den autorisierten Elementen in der Datenbank (12); nach Schritt D das Verfahren ferner aufweist die Schritte des:
Erstellens eines Unterkontos gemäß dem Konto und Zuweisens eines Teils der autorisierten Elemente zu dem Unterkonto und anschließendes Speicherns des Unterkontos in den Autorisiertes-Unterkonto-Feld in den zugewiesenen autorisierten Elementen in der Datenbank (12);
Bereitstellens einer weiteren elektronischen Vorrichtung (40, 50), welche mit dem Datenmanagementsystem (100) verbunden ist, Eingebens des Unterkontos in die weitere elektronische Vorrichtung (40, 50) und Übertragens des Unterkontos an das Datenmanagementsystem (100);
wobei das Datenverwaltungssystem (100) den Autorisierungscode und das empfangene Unterkonto mit den Autorisierungscodefeldern der Produktelemente und den Autorisiertes-Unterkonto-Feldern vergleicht und so die autorisierten Elemente, welche zu dem Unterkonto gehören, erlangt und dann die erlangten autorisierten Elemente an die weitere elektronische Vorrichtung (40, 50) überträgt.

## Revendications

1. Procédé de délégation d'autorité d'édition de données d'articles de produits, qui est appliqué à un système de gestion de données (100) comprenant une base de données (12) stockant une pluralité d'articles de produits, dans lequel le procédé comprend les étapes consistant à :
A. sélectionner une pluralité d'articles de produits dans la base de données (12), ce qui est fait par une première partie, puis définir la pluralité d'articles de produits comme une pluralité d'articles autorisés ;
B. générer un code d'autorisation correspondant aux articles autorisés, et générer un message de notification correspondant au code d'autorisation, étapes qui sont effectuées par le système de gestion de données, et donner au code d'autorisation une période effective, étape qui est effectuée par le système de gestion de données (100) ;
C. fournir un dispositif électronique (40, 50) connecté au système de gestion de données (100) ; répondre au message de notification par l'intermédiaire du dispositif électronique (40, 50), étape qui est effectuée par une seconde partie ; vérifier la période effective du code d'autorisation, dans lequel l'étape D et l'étape E interviennent lorsque la date actuelle tombe dans la période effective ; si la date actuelle dépasse la période effective, l'étape D et l'étape E n'interviendront pas ;
D. obtenir les articles autorisés à partir de la base de données (12) selon le code d'autorisation qui correspond au message de notification auquel la seconde partie a répondu, puis transférer les articles autorisés vers le dispositif électronique (40, 50), qui sont effectués par le système de gestion de données (100) ;
E. sélectionner au moins un des articles autorisés reçus via le dispositif électronique (40, 50), et réviser le contenu des articles autorisés sélectionnés, puis transférer le contenu révisé à la base de données (12) pour stockage ; vérifier la période effective du code d'autorisation avec le système de gestion de données après que le dispositif électronique transfère le contenu révisé au système de gestion de données ; si la date actuelle tombe dans la période effective, stocker le contenu révisé transféré à partir du dispositif électronique (40, 50) ; si la date actuelle dépasse la période effective, le contenu révisé transféré à partir du dispositif électronique (40, 50) ne sera pas stocké.

2. Procédé selon la revendication 1, dans lequel une pluralité de comptes sont enregistrés dans le système de gestion de données (100) ; l'étape B comprend en outre les étapes consistant à sélectionner un de la pluralité de comptes, et à transférer le message de notification au compte sélectionné ; à l'étape C, la seconde partie répond au message de notification via le dispositif électronique (40, 50) par le compte sélectionné.

3. Procédé selon la revendication 1, comprenant en outre l'étape suivante après l'étape D :
avant l'expiration du code d'autorisation, transférer un message de notification de période effective au dispositif électronique (40, 50).

4. Procédé selon la revendication 1, dans lequel chacun des articles de produits présente une pluralité de champs ;
l'étape A comprend en outre les étapes consistant à sélectionner une pluralité de champs dans les articles de produits sélectionnés, et à définir la pluralité de champs sélectionnés comme une pluralité de champs autorisés dans chacun des articles de produits sélectionnés ; à l'étape D, obtenir les champs autorisés dans les articles autorisés, puis transférer les champs autorisés dans les articles autorisés au dispositif électronique (40, 50).

5. Procédé selon la revendication 4, dans lequel les champs autorisés dans chacun des articles autorisés présentent au moins un champ révisable ; comprenant les étapes consistant à, à l'étape E, réviser le champ révisable dans les articles autorisés sélectionnés, puis transférer le contenu révisé dans le champ révisable vers la base de données (12) pour stockage.

6. Procédé selon la revendication 5, dans lequel à l'étape E, les articles autorisés sont affichés sur un écran (42, 52) du dispositif électronique (40, 50) ; comprenant les étapes consistant à cliquer sur les articles autorisés affichés sur l'écran (42, 52), et révisez le champ révisable dans les articles autorisés sélectionnés.

7. Procédé selon la revendication 1, dans lequel chacun des articles de produits présente un champ de code d'autorisation ; l'étape B comprend en outre l'étape consistant à répertorier le code d'autorisation dans le champ de code d'autorisation dans les articles autorisés ; comprenant les étapes consistant à, à l'étape D, filtrer et obtenir les articles autorisés en comparant le code d'autorisation avec le champ de code d'autorisation dans les articles de produits de la base de données (12).

8. Procédé selon la revendication 7, dans lequel chacun des articles de produits présente un champ de compte autorisé ; une pluralité de comptes sont enregistrés dans le système de gestion de données (100) ; comprenant l'étape consistant à, à l'étape B, transférer le message de notification à un des comptes ; l'étape C comprend en outre l'étape suivante après avoir répondu au message de notification : le système de gestion de données (100) enregistre le compte qui répond au message de notification dans les champs de compte autorisé dans les articles autorisés dans la base de données (12) ;
dans lequel l'étape D est suivie des étapes consistant à :
fournir un autre dispositif électronique (40, 50) connecté au système de gestion de données, entrer le compte qui répond au message de notification dans l'autre dispositif électronique (40, 50), et transférer le compte au système de gestion de données (100) ;
le système de gestion de données (100) compare le code d'autorisation et le compte reçu avec les champs de code d'autorisation des articles de produits dans la base de données (12) et les champs de compte autorisé, et ainsi filtre et obtient les articles autorisés, puis transfère les articles autorisés obtenus à l'autre dispositif électronique (40, 50).

9. Procédé selon la revendication 7, dans lequel chacun des articles de produits présente un champ de compte autorisé et un champ de sous-compte ; l'étape C comprend en outre les étapes consistant à entrer un compte dans le dispositif électronique (40, 50), et à transférer le compte au système de gestion de données (100) ainsi qu'à enregistrer le compte dans les champs de compte autorisé dans les articles autorisés dans la base de données (12) ; après l'étape D, le procédé comprend en outre les étapes consistant à :
créer un sous-compte en fonction du compte, et attribuer une partie des articles autorisés au sous-compte, puis enregistrer le sous-compte dans les champs de sous-compte autorisé dans les articles autorisés attribués dans la base de données (12) ;
fournir un autre dispositif électronique (40, 50) connecté au système de gestion de données (100), entrer le sous-compte dans l'autre dispositif électronique (40, 50), et transférer le sous-compte au système de gestion de données (100) ;
le système de gestion de données (100) compare le code d'autorisation et le sous-compte reçu avec les champs de code d'autorisation des articles de produits et les champs de sous-compte autorisé, et obtient ainsi les articles autorisés correspondant au sous-compte, puis transfère les articles autorisés obtenus à l'autre dispositif électronique (40, 50).
